# EUROPÄISCHE PATENTSCHRIFT

(11) **EP 3 257 734 B1**
(45) Veröffentlichungstag und Bekanntmachung des Hinweises auf die Patenterteilung: **15.05.2019**
(21) Anmeldenummer: 17175648.9
(22) Anmeldetag: 13.06.2017
(51) Int. Cl.: B62K 21/26

(54) **FAHRRADGRIFF**
BICYCLE HANDLEBAR GRIP
POIGNÉE DE VÉLO

(30) Priorität: 14.06.2016 DE 202016003699 U
(43) Veröffentlichungstag der Anmeldung: 20.12.2017
(73) Patentinhaber: Ergon International GmbH, 56070 Koblenz (DE)
(72) Erfinder: Krause, Andreas, 56068 Koblenz (DE); Holzschuher, Jan, 56068 Koblenz (DE); Arnold, Franc, 56068 Koblenz (DE)
(74) Vertreter: dompatent von Kreisler Selting Werner - Partnerschaft von Patent- und Rechtsanwälten mbB

(56) Entgegenhaltungen:
- US-A1- 2008 156 139
- US-A1- 2011 277 586

## Beschreibung

Die Erfindung betrifft einen Fahrradgriff.

Zur Befestigung von Fahrradgriffen an Fahrradlenkern ist es bekannt, dass Fahrradgriffe eine Innenhülse aus üblicherweise relativ hartem Material aufweisen. Die Innenhülse ist von einem Griffelement aus weicherem Material umgeben, beispielsweise umspritzt. In einem Außenbereich des Fahrradgriffs ist die Innenhülse nicht von dem Griffelement umgeben. In diesem Bereich ist die Hülse von einem schellenartigen Klemmelement umgeben. Da die Innenhülse in Längsrichtung geschlitzt ist, ist es mit Hilfe des Klemmelements möglich den Fahrradgriff klemmend am Lenker zu fixieren. Hierbei ist es beispielsweise aus EP 04 764 244.2 bekannt, das schellenartige Klemmelement äußerlich derart zu gestalten, dass die Außenseite des Griffelements stufenfrei in das Klemmelement übergeht und insofern das Klemmelement beim Umgreifen des Fahrradgriffs mit umgriffen werden kann. Insbesondere bei Fahrradgriffen, deren Klemmelemente in montierten Zustand an der Außenseite des Lenkers angeordnet sind, weist dies den Nachteil auf, sofern der Griff relativ weit außen gegriffen wird, dass der Handballen auf der aus hartem Material wie Aluminium oder einem anderen Metall hergestellten Schelle abgestützt wird. Dies ist insbesondere nachteilig, da besonders in diesem Bereich der Hand eine Dämpfung wünschenswert ist.

Desweiteren ist es aus US 2011/0277586, welche die Präambel des unabhängigen Anspruchs 1 offenbart, bekannt das Klemmelement mit einem mit dem Greifelement einstückig ausgebildeten Ansatz zu überdecken. Hierbei handelt es sich um einen Ansatz aus weichem Material entsprechend dem Material des Griffelements. Dies ist dementsprechend leicht verformbar und führt dazu, dass es beim Verschieben der Hand auf dem Fahrradgriff nach innen umgestülpt werden kann. Das Vorsehen eines derartigen mit dem Griffelement einstückig ausgebildeten Ansatzes, der entsprechend einer weichen Hülse das Klemmelement bzw. die Klemmschelle umgibt, hat insbesondere den Nachteil, dass diese keinerlei Verbindung mit der Klemmschelle eingeht und insofern auf der Außenseite der Schelle rutscht bzw. bewegbar ist. Hierdurch ist kein sicheres Greifen ermöglicht.

Desweiteren ist aus US 2007/0157758 ein Fahrradgriff mit einer harten Innenhülse bekannt, die von einem Greifelement aus weicherem Material umgeben ist. Die härtere Innenhülse weist eine größere Breite auf, so dass auf einer Seite ein Klemmbereich entsteht. Im Klemmbereich weist die Innenhülse mehrere in radiale Richtung verlaufende Schlitze auf. Dieser Bereich ist einerseits von einem schellenförmigen Klemmelement umgeben, das zusätzlich von einem Schutzelement oder einer Hülse umgeben ist. Diese äußere Hülse wird durch die Schraube, die das Klemmelement fixiert, mit gehalten. Es handelt sich hierbei um ein gesondertes, die Hülse umgebendes Element. Da dies nicht mit dem Griffelement verbunden ist, ist kein guter Greifkomfort erzielt. Desweiteren ist die Montage schwierig.

Aufgabe der Erfindung ist es einen Fahrradgriff zu schaffen, bei dem der Komfort insbesondere im Bereich eines Klemmelements verbessert ist.

Die Lösung der Aufgabe erfolgt erfindungsgemäß durch die Merkmale des Anspruchs 1.

Der erfindungsgemäße Fahrradgriff weist eine Innenhülse auf, die von einem Griffelement, das insbesondere aus weicherem Material hergestellt ist als die Innenhülse, umgeben ist. Desweiteren weist die Innenhülse einen Klemmbereich auf, der insbesondere vollständig von einem Klemmelement zum klemmenden Befestigen der Innenhülse auf einem Fahrradlenker umgeben ist. Das Klemmelement dient zum klemmenden Befestigen des Fahrradgriffs am Fahrradlenker. Erfindungsgemäß ist das Klemmelement zumindest teilweise insbesondere in Umfangsrichtung von einer Schutzhülse umgeben. Über die Breite, d.h. in Längsrichtung des Fahrradgriffs, erstreckt sich die Schutzhülse vorzugsweise über die gesamte Breite des Klemmelements. Beim Umgreifen des Fahrradgriffs erfolgt somit auch beim Greifen des Fahrradgriffs im Bereich des Klemmelements kein oder nur ein teilweises Abstützten auf dem Klemmelement. Hierdurch ist der Komfort des Fahrradgriffs erheblich verbessert. Erfindungsgemäß ist die Schutzhülse mit der Innenhülse verbunden. Besonders bevorzugt ist es, dass die Schutzhülse und die Innenhülse einstückig ausgebildet sind und insofern vorzugsweise aus demselben Material hergestellt sind. Vorzugsweise umgibt die Schutzhülse in Umfangsrichtung zumindest teilweise den Klemmbereich der Innenhülse. Hierdurch entsteht eine schlitzförmige Aufnahme für das insbesondere als Schelle ausgebildete Klemmelement.

In besonders bevorzugter Ausführungsform ist die Schutzhülse mit einem weichen Material umgeben. Insbesondere handelt es sich hier um dasselbe Material wie das Material des Griffelements, wobei es besonders bevorzugt ist, dass ein die Schutzhülse umgebendes Element einstückig mit dem Griffelement ausgebildet ist. Hierdurch kann der Komfort weiter verbessert werden. Desweiteren ist es möglich dieses Element aus weicherem Material fest mit der Schutzhülse zu verbinden, sodass ein Verformen oder Umstülpen nach innen beim Bewegen der Hand vermieden ist. Besonders bevorzugt ist es hierbei, dass das Griffelement zusammen mit dem die Schutzhülle insbesondere vollständig umgebenden Ansatz oder Teilbereich des Griffelements einstückig ausgebildet und durch Umspritzen hergestellt ist. Bevorzugt ist es insofern, dass die mit der Innenhülse einstückig ausgebildete Schutzhülse mit weicherem Material gemeinsam umspritzt wird. Durch dieses weichere Material wird das Griffelement zusammen mit dem Ansatz, der die Schutzhülse umgibt, ausgebildet. Das Umspritzen hat ferner den Vorteil, dass eine feste Verbindung des umspritzten Materials, d.h. des Griffelements und des entsprechenden Ansatzes mit der Innenhülse sowie der Schutzhülse realisiert werden kann.

Das Klemmelement ist vorzugsweise schellenartig ausgebildet und umgibt die Innenhülse im Klemmbereich vorzugsweise vollständig. Hierdurch kann auf einfache Weise ein klemmendes Befestigen der Innenhülse auf dem Fahrradlenker erfolgen. Das Klemmelement weist vorzugsweise zwei zueinander beabstandete Ansätze zur Aufnahme eines Klemmmittels wie einer Schraube auf. Diese im montierten Zustand insbesondere nach außen vom Lenker weg weisenden Ansätze weisen insbesondere eine mit einem Gewinde versehene und eine einen Schraubenkopf oder dergleichen aufnehmende Bohrung auf. Durch das Beabstanden der beiden Ansätze ist zwischen diesen ein Schlitz ausgebildet. Die Breite des Schlitzes kann durch das Klemmmittel verringert werden, sodass ein klemmendes Befestigen der Innenhülse auf dem Fahrradlenker erfolgt. Hierzu ist es besonders bevorzugt, dass auch die Innenhülse im Klemmbereich einen Schlitz aufweist, um das klemmende Befestigen auf dem Fahrradlenker zu erleichtern. In besonders bevorzugter Ausführungsform ist das Klemmmittel derart ausgestaltet, dass es vollständig innerhalb der beiden Ansätze angeordnet ist. Dies ist insbesondere bereits gegeben, auch wenn das Klemmmittel noch nicht fixiert ist. Bei einem als Schraube ausgebildeten Klemmmittel ist somit der Schraubenkopf, der beispielsweise als Innensechskant bzw. als Inbus ausgebildet sein kann, vollständig innerhalb eines der beiden Ansätze angeordnet. Dies hat den erheblichen Vorteil, dass das Klemmelement in vormontiertem Zustand, d.h. bereits mit eingesetztem Klemmmittel, in dem Klemmbereich angeordnet werden kann. Das Klemmelement kann somit in bevorzugter Ausführungsform von außen in den Schlitz eingesteckt werden, der zwischen dem Klemmbereich der Innenhülse und der Schutzhülse ausgebildet ist. Dies kann insbesondere auch erfolgen, wenn der Griff bereits vollständig mit weicherem Material umspritzt ist, das das Greifelement ausbildet und die Schutzhülse insbesondere vollständig umgibt. Hierdurch ist die Montage erheblich vereinfacht. Auch kann beispielsweise eine Öffnung in dem Bereich des Griffelements, der die Schutzhülse umgibt, sehr klein ausgebildet sein, da lediglich ein Inbusschlüssel durch eine insbesondere kreisförmige Öffnung gesteckt werden muss, um das Klemmmittel zu fixieren, d.h. insbesondere um die Schraube festzuziehen.

Bei einer weiteren bevorzugten Ausführungsform der Erfindung umgibt die Schutzhülse das Klemmelement je nach Ausgestaltung des Klemmelements vollständig. Handelt es sich bei dem Klemmelement um ein Klemmelement mit Ansätzen zur Aufnahme eines Klemmmittels, ist es bevorzugt, dass die Schutzhülse das Klemmelement mit Ausnahme dieser Ansätze vollständig umgibt. Als Klemmelement können jedoch auch beispielsweise zwei gegeneinander verdrehbare beispielsweise geschlitzte Ringe, die zudem eine Verdickung aufweisen, vorgesehen sein. Durch das Verdrehen erfolgt ein Verformen und somit ein Verklemmen. Ein derartiges Klemmelement könnte sodann vollständig von der Schutzhülse umgeben sein.

Desweiteren ist es bevorzugt, dass die Schutzhülse mit der Innenhülse verbunden und insbesondere einstückig ausgebildet ist. Vorzugsweise sind die Schutzhülse und die Innenhülse aus demselben Material in insbesondere einem Arbeitsschritt hergestellt. Hierdurch ist es insbesondere möglich auf der Außenseite der Schutzhülse ein weicheres Material, insbesondere einen Ansatz des Griffelements anzuordnen.

Die Schutzhülse umgibt die Innenhülse im Klemmbereich bzw. das montierte Klemmelement mindestens über die Hälfte des Umfangs, insbesondere mindestens über ¾ des Umfangs. In dem verbleibenden Bereich sind beim Vorsehen eines Klemmelements mit Ansätzen zur Aufnahme des Klemmmittels dessen Ansätze angeordnet. Vorzugsweise erstreckt sich die Schutzhülle über die gesamte Breite des Klemmbereichs bzw. über die gesamte Breite des montierten Klemmelements. Vorzugsweise ist das Klemmelement somit vollständig zwischen dem Klemmbereich der Innenhülse und der Schutzhülse angeordnet, mit Ausnahme der ggf. vorgesehenen Ansätze zur Aufnahme des Klemmmittels. Das Griffelement weist in bevorzugter Ausführungsform einen Ansatz auf, der die Schutzhülse in Längsrichtung sowie auch in Umfangsrichtung vollständig umgibt. Auch bei Vorsehen eines Klemmelements mit Ansätzen zur Aufnahme des Klemmmittels ist insbesondere bevorzugt, dass der Bereich bzw. der Ansatz des Griffelements die Ansätze des Klemmelements mit umgibt. Insofern ist eine durchgehende Oberfläche realisiert, die ausschließlich aus dem weicheren Material des Griffelements besteht. Dies hat den Vorteil, dass, auch wenn der Griff ganz außen im Bereich des Klemmelements gegriffen wird, kein Greifen des Klemmelements selbst erfolgt, sondern stets ein entsprechend weiches Material gegriffen wird. Dies erhöht den Greifkomfort.

Zwischen der Innenhülse und der Schutzhülse ist vorzugsweise ein zu einer Außenseite des Fahrradgriffs bzw. zu einem Rand des Fahrradgriffs offener Schlitz angeordnet. In diesen Schlitz kann das Klemmelement von außen auf einfache Weise, insbesondere mit vormontiertem Klemmmittel eingesteckt werden. Da es besonders bevorzugt ist, dass das Klemmelement und auch die Schutzhülse vollständig von dem Griffelement bzw. dem mit dem Griffelement verbundenen Ansatz umgeben sind, kann hierdurch auch das Halten des Klemmelements vor dem Fixieren in dieser schlitzförmigen Aufnahme verbessert werden. Dies ist insbesondere dann der Fall, wenn das Klemmelement Ansätze zur Aufnahme des Klemmmittels aufweist, da die Ansätze unmittelbar mit dem Material des Klemmelements in Kontakt gelangen. Im Bereich der Ansätze ist bei dieser Ausgestaltung keine Schutzhülse vorgesehen, so dass die Ansätze unmittelbar von dem Klemmelement umgeben sind. Aufgrund des für das Klemmelement bevorzugt verwendeten weicheren Materials entsteht eine haftende gummierte Innenseite bzw. Oberfläche in diesem Bereich, an dem die Außenseite der Ansätze anliegt.

Die Innenhülse des Fahrradgriffs und vorzugsweise auch die Schutzhülse sind aus härterem Material als das Griffelement und insbesondere auch der die Schutzhülse überdeckenden Ansatz des Griffelements ausgebildet. Als Material ist hierbei beispielsweise PP oder PP-GF geeignet. Besonders bevorzugt ist es, den Innenkern aus faserverstärktem Material, insbesondere glasfaserverstärktem Material, wie glasfaserverstärktem PP herzustellen. Das Material des Griffelements selbst ist weicher ausgebildet, wobei beispielsweise TPE verwendet werden kann. Insbesondere erfolgt das Herstellen des Griffelements sowie des mit dem Griffelement vorzugsweise verbundenen Ansatzes, der die Schutzhülle und das Klemmelement umgibt, durch Umspritzen. Dies führt zu einer guten Verbindung zwischen der äußeren Oberfläche der Innenhülse und dem Greifelement bzw. der äußeren Oberfläche der Schutzhülle und dem Greifelement. Nachfolgend wird die Erfindung anhand eines Ausführungsbeispiels unter Bezugnahme auf die anliegenden Zeichnungen näher beschrieben.

Es zeigen:
- Figur 1: eine schematische Schnittansicht einer bevorzugten Ausführungsform des erfindungsgemäßen Fahrradgriffs,
- Figur 2: eine schematische Draufsicht auf eine bevorzugte Ausführungsform des verwendeten Klemmelements,
- Figur 3: eine schematische Seitenansicht des Fahrradgriffs in Richtung des Pfeils III in Figur 1 mit montiertem Klemmelement, und
- Figur 4: eine schematische perspektivische Ansicht des Bereichs des Fahrradgriffs, in dem das Klemmelement angeordnet ist.

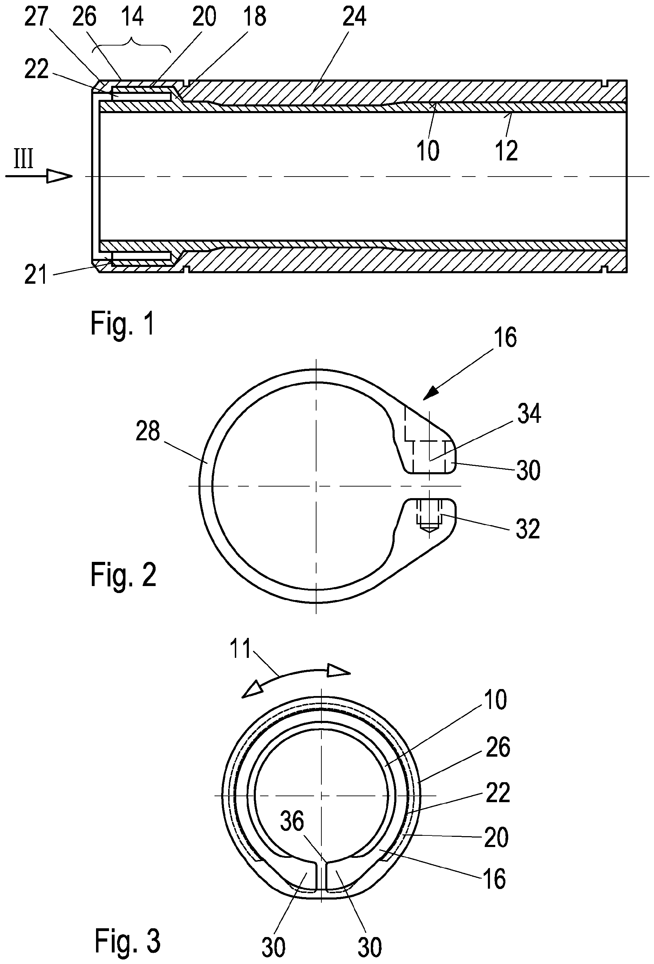

Der erfindungsgemäße Fahrradgriff weist eine Innenhülse 10 auf. Diese weist eine im Wesentlichen zylindrisch ausgebildete Innenseite 12 auf, deren Durchmesser geringfügig größer als der Außendurchmesser eines Fahrradlenkers ist, sodass die Innenhülse 10 auf einen Fahrradlenker auf einfache Weise aufsteckbar ist. Bei dem in Figur 1 dargestellten Ausführungsbeispiel handelt es sich um einen im montierten Zustand linken Fahrradgriff, sodass in einem äußeren Bereich des Fahrradgriffs ein Klemmbereich 14 vorgesehen ist. Im Klemmbereich 14 wird zum klemmenden Befestigen des Fahrradgriffs auf dem Fahrradlenker ein Klemmelement 16, insbesondere in Form einer Klemmschelle (Figur 2), angeordnet. Die Innenhülse 10 ist über ein stegförmiges Verbindungselement 18 mit einer Schutzhülse 20 verbunden, insbesondere einstückig mit dieser ausgebildet. Die Schutzhülse 20 umgibt im Klemmbereich 14 diesen zu insbesondere mehr als ¾ der Umfangsrichtung (Pfeil 11 in Figur 3).

Hierbei ist zwischen der Schutzhülse 20 und der Innenhülse 10 im Klemmbereich 14 ein Schlitz 22 konstanter Breite ausgebildet.

Sowohl die Innenhülse 10 als auch die Schutzhülse 20 sind von einem Griffelement 24 aus weicherem Material umgeben, insbesondere umspritzt. Somit weist der Fahrradgriff insbesondere auch im Klemmbereich 14 an seiner Außenseite ein weiches Material auf. Beim Vorsehen einer Schutzhülse 20 ist es möglich im Klemmbereich das Material des Griffelements 24, das heißt insbesondere einen Ansatz 26 des Griffelements 24 fest mit einer Außenseite der Schutzhülse 20 zu verbinden. Hierdurch ist beim Bewegen der Hand auf dem Fahrradgriff ein Umstülpen dieses Bereichs nach innen vermieden. Hierzu weist der Ansatz 26 des Griffelements 24 ferner einen radial nach innen weisenden Vorsprung 27 auf. Dieser umgibt eine Außenseite 21 der Schutzhülse bzw. liegt an der Außenseite 21 der Schutzhülse 20 an.

Das Klemmelement ist im dargestellten Ausführungsbeispiel schellenartig ausgebildet. Das Klemmelement 16 (Figur 2) weist daher einen teil-rohrförmigen Bereich 28 auf, der jeweils an seinen Enden mit einem Ansatz 30 verbunden ist. Der eine Verdickung ausbildende Ansatz 30 dient zur Aufnahme eines Klemmmittels wie einer Schraube. Hierzu weist einer der beiden Ansätze 30 ein Gewinde 32 und der gegenüberliegende Ansatz 30 eine Ausnehmung 34 zur insbesondere vollständigen Aufnahme eines Schraubenkopfs auf.

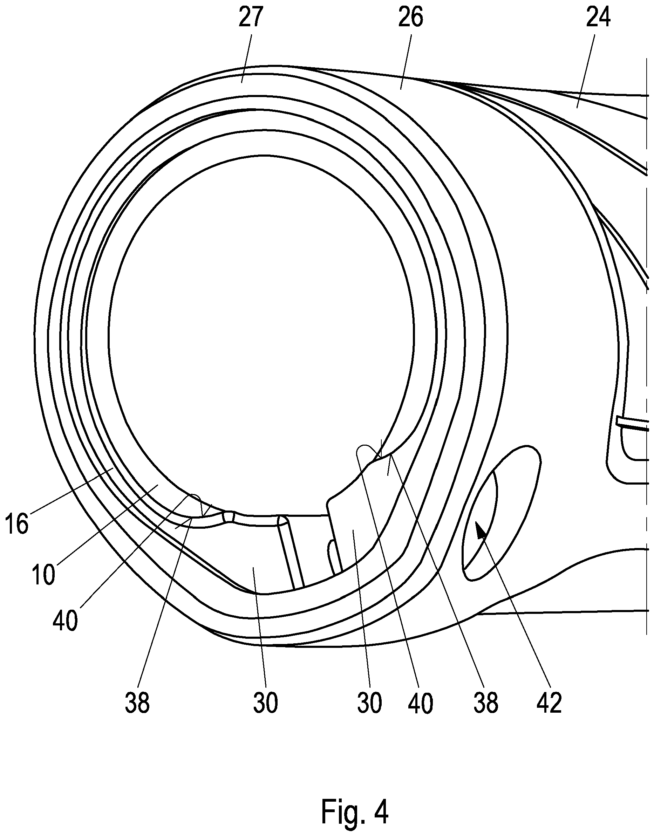

Zur Montage wird das Klemmelement 16 in Figur 1 von links in den Schlitz 22 eingeführt. Eine entsprechende Ansicht des Fahrradgriffs von links mit eingeführtem Klemmelement ist in Figur 3 und perspektivisch in Figur 4 schematisch dargestellt. In dieser Ansicht ist eine Stirnseite der Innenhülse 10 sichtbar, die eine Ausnehmung bzw. einen Klemmschlitz 36 insbesondere in dem Bereich aufweist, in dem im montierten Zustand die Ansätze 30 des Klemmelements 16 angeordnet sind. Die Randbereiche der Innenhülse 10 im Bereich des Klemmschlitzes 36 sind hierbei sich verjüngend ausgebildet. Insbesondere weisen diese Randbereiche eine konvexe Krümmung 38 auf, an die sich eine konkave Krümmung 40 des Klemmelements 16 anlegt. Die konkave Krümmung 60 des Klemmelements 16 ist im Übergangsbereich zwischen dem rohrförmigen Stück des Klemmelements 16 und den beiden Ansätzen 30 vorgesehen. Das Klemmelement 16 ist in dem Schlitz 22 angeordnet. Dieser ist durch die Innenhülse 10 und die die Innenhülse zumindest um ¾ umgebende Schutzhülse 20 ausgebildet. Die Schutzhülse 20 ist sodann wiederum von dem Ansatz 26 des Griffelements 24 überdeckt. Zur Verdeutlichung ist in Figur 3 der nach innen weisende, die Schutzhülse in Seitenansicht verdeckende Vorsprung 27 des Ansatzes 26 des Griffelements 24 nicht dargestellt.

Desweiteren ist aus der perspektivischen Ansicht in Figur 4 eine Öffnung 42 im Bereich 26 des Griffelements 24 sichtbar. Diese Öffnung dient insbesondere zum Einführen des Werkzeuges, wie eines Inbusschlüssels, zum Anziehen des insbesondere als Schraube mit Inbus ausgebildeten Klemmmittels.

Im Bereich der Ansätze 30 des Klemmelements 16 liegen diese unmittelbar an einer Innenseite des Ansatzes 26 des Griffelements 24 an, so dass hierdurch eine gummierte Innenseite entsteht, die eine weitere Fixierung des Klemmelements 16 vor dem Montieren auf den Lenker realisiert. Hierdurch ist insbesondere auch ein Herausrutschen des Klemmelements 16 aus dem Schlitz 22 vermieden.

## Patentansprüche

1. Fahrradgriff, mit
einer Innenhülse (10),
einem die Innenhülse (10) umgebenden Griffelement (24) und
einem die Innenhülse in einem Klemmbereich (14) insbesondere vollständig umgebenden Klemmelement (16) zum klemmenden Befestigen der Innenhülse auf einem Fahrradlenker,
**dadurch gekennzeichnet, dass**
das Klemmelement (16) zumindest teilweise von einer Schutzhülse (20) umgeben ist, die mit der Innenhülse (10) verbunden, insbesondere einstückig ausgebildet ist und das Griffelement (24, 26) die Schutzhülse (20) insbesondere vollständig überdeckt.

2. Fahrradgriff nach Anspruch 1, **dadurch gekennzeichnet, dass** das Klemmelement (16) schellenartig ausgebildet ist und die Innenhülse (10) im Klemmbereich (14) vollständig umgibt.

3. Fahrradgriff nach Anspruch 1 oder 2, **dadurch gekennzeichnet, dass** das Klemmelement (16) zueinander beabstandete Ansätze (30) zur Aufnahme eines Klemmmittels aufweist.

4. Fahrradgriff nach einem der Ansprüche 1 - 3, **dadurch gekennzeichnet, dass** die Innenhülse (10) im Klemmbereich einen Klemmschlitz (36) aufweist.

5. Fahrradgriff nach Anspruch 3 oder 4, **dadurch gekennzeichnet, dass** die Schutzhülse (20) das Klemmelement (16) mit Ausnahme der Ansätze (30) vollständig umgibt.

6. Fahrradgriff nach einem der Ansprüche 1 - 5, **dadurch gekennzeichnet, dass** die Schutzhülse (20) die Innenhülse (10) bzw. das Klemmelement (16) in montiertem Zustand mindestens über die Hälfte, insbesondere mindestens über ¾ des Umfangs umgibt.

7. Fahrradgriff nach einem der Ansprüche 1 - 6, **dadurch gekennzeichnet, dass** die Schutzhülse (20) die Innenhülse (10) bzw. in montiertem Zustand das Klemmelement (16) über die gesamte Breite überdeckt.

8. Fahrradgriff nach einem der Ansprüche 1 - 7, **dadurch gekennzeichnet, dass** zwischen der Innenhülse (10) und der Schutzhülse (20) ein zu einer Außenseite des Fahrradgriffs offener Schlitz (22) zur Aufnahme des Klemmelements (16), vorzugsweise zusammen mit einem vormontierten Klemmmittel des Klemmelements (16) ausgebildet ist.

9. Fahrradgriff nach einem der Ansprüche 1 - 8, **dadurch gekennzeichnet, dass** die Innenhülse (10) und vorzugsweise auch die Schutzhülse (20) aus härterem Material als das Griffelement (24, 26) hergestellt ist.

10. Fahrradgriff nach einem der Ansprüche 1 - 9, **dadurch gekennzeichnet, dass** das Griffelement (24) eine Außenkante (21) der Schutzhülse (20) zumindest teilweise überdeckt.

11. Fahrradgriff nach einem der Ansprüche 1 - 10, **dadurch gekennzeichnet, dass** das Griffelement (24, 26) das Klemmmittel (16) in montiertem Zustand in Umfangsrichtung und vorzugsweise über die gesamte Breite vollständig umgibt.

12. Fahrradgriff nach einem der Ansprüche 1 - 11, **dadurch gekennzeichnet, dass** das Griffelement (24, 26) durch Umspritzen der Innenhülse (10) sowie der Schutzhülse (20) hergestellt ist.

## Claims

1. Bicycle handle with
an inner sleeve (10),
a handle element (24) surrounding the inner sleeve (10), and
a clamping element (16) which surrounds the inner sleeve in particular entirely in a clamping region (14), the clamping element clampingly fastening the inner sleeve on a bicycle handlebar,
**characterized in that**
the clamping element (16) is at least partly surrounded by a protective sleeve (20) that is connected to, in particular integrally formed with the inner sleeve (10), and the handle element (24, 26) covers the protective sleeve (20) in particular entirely.

2. Bicycle handle of claim 1, **characterized in that** the clamping element (16) is of a clip-like design and surrounds the inner sleeve (10) entirely in the clamping region (14).

3. Bicycle handle of claim 1 or 2, **characterized in that** the clamping element (16) has spaced apart protrusions (30) for receiving a clamping means.

4. Bicycle handle of one of claims 1 - 3, **characterized in that** the inner sleeve (10) has a clamping slit (36) in the clamping region.

5. Bicycle handle of claim 3 or 4, **characterized in that** the protective sleeve (20) surrounds the clamping element (16) entirely except for the protrusions (30).

6. Bicycle handle of one of claims 1 - 5, **characterized in that**, in the mounted state, the protective sleeve (20) surrounds the inner sleeve (10) or the clamping element (16) for at least half the circumference, in particular for at least ¾ of the circumference.

7. Bicycle handle of one of claims 1 - 6, **characterized in that** the protective sleeve (20) covers the inner sleeve (10) or, when in the mounted state, the clamping element (16) over the entire width.

8. Bicycle handle of one of claims 1 - 7, **characterized in that**, between the inner sleeve (10) and the protective sleeve (20), a slit (22) is formed that is open to an outer side of the bicycle handle and serves to receive the clamping element (16), preferably together with a pre-assembled clamping means of the clamping element (16).

9. Bicycle handle of one of claims 1 - 8, **characterized in that** the inner sleeve (10), and preferably also the protective sleeve (20), is made of a harder material than the handle element (24, 26).

10. Bicycle handle of one of claims 1 - 9, **characterized in that** the handle element (24) covers an outer edge (21) of the protective sleeve (20) at least partly.

11. Bicycle handle of one of claims 1 - 10, **characterized in that** the handle element (24, 26) fully surrounds the clamping means (16), when in the mounted state, in the circumferential direction and preferably over the entire width.

12. Bicycle handle of one of claims 1 - 11, **characterized in that** the handle element (24, 26) is manufactured by overmolding the inner sleeve (10), as well as the protective sleeve (20).

## Revendications

1. Poignée de vélo avec
une douille intérieure (10),
un élément de poignée (24) entourant la douille intérieure (10) et
un élément de serrage (16) entourant la douille intérieure notamment entièrement dans une zone de serrage (14) pour fixer la douille intérieure par serrage sur un guidon de vélo,
**caractérisée en ce que**
l'élément de serrage (16) est entouré au moins partiellement d'une douille de protection (20) qui est attachée à la douille intérieure (10), notamment réalisée avec celle-ci en une seule pièce, et que l'élément de poignée (24, 26) recouvre notamment entièrement la douille de protection (20).

2. Poignée de vélo selon la revendication 1, **caractérisée en ce que** l'élément de serrage (16) est configuré comme un collier de serrage et entoure la douille intérieure (10) entièrement dans la zone de serrage (14).

3. Poignée de vélo selon la revendication 1 ou 2, **caractérisée en ce que** l'élément de serrage (16) comprend des raccords (30) espacés l'un de l'autre pour recevoir un moyen de serrage.

4. Poignée de vélo selon l'une des revendications 1 à 3, **caractérisée en ce que**, dans la zone de serrage, la douille intérieure (10) comprend une fente de serrage (36).

5. Poignée de vélo selon la revendication 3 ou 4, **caractérisée en ce que** la douille de protection (20) entoure l'élément de serrage (16) entièrement à l'exception des raccords (30).

6. Poignée de vélo selon l'une des revendications 1 à 5, **caractérisée en ce que** la douille de protection (20) entoure la douille intérieure (10) ou respectivement, en l'état monté, l'élément de serrage (16) au moins sur la moitié, notamment au moins sur trois quarts de la circonférence.

7. Poignée de vélo selon l'une des revendications 1 à 6, **caractérisée en ce que** la douille de protection (20) entoure la douille intérieure (10) ou respectivement, en l'état monté, l'élément de serrage (16) sur la largeur entière.

8. Poignée de vélo selon l'une des revendications 1 à 7, **caractérisée en ce que**, entre la douille intérieure (10) et la douille de protection (20), une fente (22) ouverte vers une face extérieure de la poignée de vélo, est formée, notamment ensemble avec un moyen de serrage prémonté de l'élément de serrage (16).

9. Poignée de vélo selon l'une des revendications 1 à 8, **caractérisée en ce que** la douille intérieure (10) et, de préférence, aussi la douille de protection (20), est réalisée en un matériau plus dur que l'élément de poignée (24, 26).

10. Poignée de vélo selon l'une des revendications 1 à 9, **caractérisée en ce que** l'élément de poignée (24) recouvre au moins partiellement un bord extérieur (21) de la douille de protection (20).

11. Poignée de vélo selon l'une des revendications 1 à 10, **caractérisée en ce que**, en l'état monté, l'élément de poignée (24, 26) entoure le moyen de serrage (16) entièrement dans la direction de circonférence et, de préférence, sur la largeur entière.

12. Poignée de vélo selon l'une des revendications 1 à 11, **caractérisée en ce que** l'élément de poignée (24, 26) est réalisé par surmoulage de la douille intérieure (10) et de la douille de protection (20).
